# EUROPÄISCHE PATENTSCHRIFT

(11) **EP 3 677 464 B1**
(45) Veröffentlichungstag und Bekanntmachung des Hinweises auf die Patenterteilung: **20.04.2022**
(21) Anmeldenummer: 19020661.5
(22) Anmeldetag: 25.11.2019
(51) Int. Cl.: B60K 15/035, F02M 25/08

(54) **ENTLÜFTUNGSSYSTEM DES KRAFTSTOFFBEHÄLTERS**
FUEL CONTAINER VENTILATION SYSTEM
SYSTÈME DE PURGE D'AIR DU RÉSERVOIR DE CARBURANT

(30) Priorität: 27.11.2018 CZ 20183566
(43) Veröffentlichungstag der Anmeldung: 08.07.2020
(73) Patentinhaber: Skoda Auto a.s., 29301 Mladá Boleslav (CZ)
(72) Erfinder: Schirmer, Ralph, DE-38118 Braunschweig (DE); Valenta, Petr, 29301 Mladá Boleslav (CZ); Windrich, Dirk, 38519 Gifhorn (DE)

(56) Entgegenhaltungen:
- DE-A1-102006 016 339
- DE-A1-102011 086 946
- US-B1- 6 357 288

## Beschreibung

### Technisches Gebiet

Die Erfindung betrifft ein Entlüftungssystem eines mit dem Aktivkohlebehälter verbundenen Kraftstoffbehälter, wobei der Aktivkohlebehälter über ein Spülventil an die Ansaugung des Verbrennungsmotors angeschlossen ist.

### Bisheriger Stand der Technik

Der Kraftstoff im Kraftstoffbehälter eines Kraftfahrzeuges verdunstet, insbesondere in den Sommermonaten. Damit die Dünste aus dem Behälter nicht in die Luft entweichen, weist der Kraftstoffbehälter ein Entlüftungssystem des Kraftstoffbehälters auf, das auch als EEC-System (Evaporative Emission Control System) bezeichnet wird. Dieses System verhindert das Entweichen der gefährlichen Kohlenwasserstoffe aus dem Kraftstoffbehälter in die Atmosphäre. Das System verhindert neben anderem die Explosionsgefahr.

Der Kraftstoffbehälter wird in ein Behälter mit Aktivkohle entlüftet, der über ein variabel öffnendes Spülventil an die Ansaugung des Verbrennungsmotors angeschlossen ist. Der Behälter mit Aktivkohle besorgt eine temporäre Absorption der aus dem Kraftstoff im Kraftstoffbehälter verdünsteten Kohlenwasserstoffe. Beim Lauf des Verbrennungsmotors und geöffnetem Spülventil wird der kondensierte Kraftstoff aus dem Aktivkohlebehälter über die Ansaugung zusammen mit der Luft in den Zylinder des Verbrennungsmotors angesaugt und verbrannt.

Bei kleinen Motoren, d.h. bei Motoren mit einem Hubraum bis zu 1000 ccm, entsteht dabei ein Problem bei der Regulierung und Dosierung in Teillastbereichen des Motors.

Die DE 10 2011 086 946 A1 zeigt ein Entlüftungssystem für einen Kraftstofftank mit einem Sorptionsfilter zum Speichern von verdampfendem Kraftstoff aus dem Kraftstofftank, wobei das Entlüftungssystem zwei Leitungen zwischen dem Kraftstofftank und einem Verbrennungsmotor aufweist.

Das Ziel der technischen Lösung ist also, solches Entlüftungssystem des Kraftstoffbehälters vorzuschlagen, das insbesondere bei kleinen Motoren eine fehlerlose Funktion sowohl bei Volllast, wie auch bei Teillast des Motors sicherstellen wird.

### Darstellung der technischen Lösung

Das genannte Ziel wird durch ein Entlüftungssystem eines mit einem Aktivkohlebehälter verbundenen Kraftstoffbehälters gemäß den Merkmalen des Anspruchs 1 erreicht, wobei der Aktivkohlebehälter über ein Spülventil an eine Leitung zwischen einer Drosselklappe und einer Ansaugung des Verbrennungsmotors angeschlossen ist, wobei der Aktivkohlebehälter an die Ansaugung des Verbrennungsmotors über mindestens ein weiteres parallel geschaltetes Spülventil angeschlossen ist.

Der Vorteil des Systems gemäß der technischen Lösung liegt darin, dass die Anordnung von zwei und mehreren parallel geschalteten Spülventile eine fehlerlose Funktion sowohl bei Volllast, wie auch bei Teillast des Motors sicherstellt.

Die Spülventile können mechanisch oder elektrisch betätigt werden.

Gemäß einer vorteilhaften Ausführung ist in der Leitung zwischen dem Aktivkohlebehälter und dem Spülventil ein Pulsationsdämpfer angeordnet.

### Übersicht der Figuren der Zeichnungen

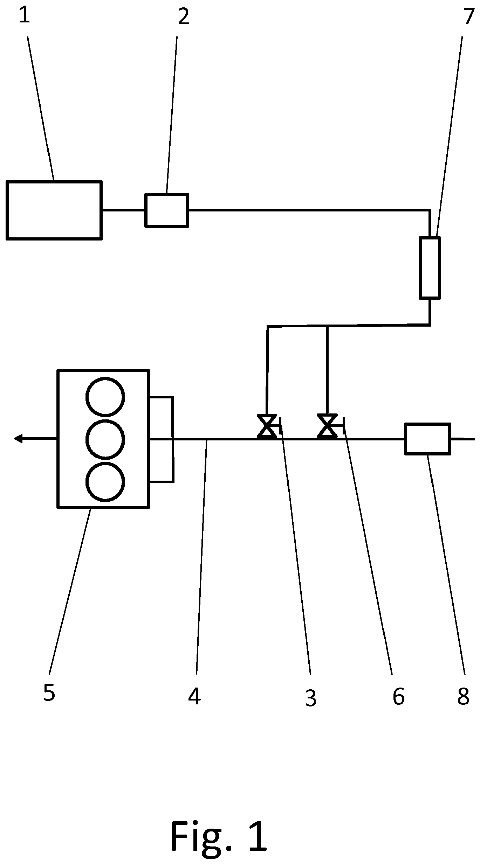

Die Fig. 1 zeigt eine schematische Darstellung des Entlüftungssystems des Kraftstoffbehälters eines Verbrennungsmotors gemäß der technischen Lösung.

### Ausführungsbeispiele

Beim Ausführungsbeispiel des Entlüftungssystems des Kraftstoffbehälters 1 nach Fig. 1 ist der Kraftstoffbehälter 1 in den Aktivkohlebehälter 2 entlüftet. Der Aktivkohlebehälter 2 ist über ein Spülventil 3 und parallel geschaltetes Spülventil 6 an die Leitung zwischen der Drosselklappe 8 und der Ansaugung 4 des Verbrennungsmotors 5 angeschlossen.

In einer nicht dargestellten Ausführung können mehrere parallel geschaltete Spülventile 3, 6 angeordnet werden.

Die Spülventile 3, 6 können mechanisch oder elektrisch betätigt werden.

Zwischen dem Aktivkohlebehälter 2 und den Spülventilen 3, 6 ist in der Leitung ein Pulsationsdämpfer 7 angeordnet.

Der Aktivkohlebehälter 2 besorgt eine temporäre Absorption der aus dem Kraftstoff im Kraftstoffbehälter 1 verdünsteten Kohlenwasserstoffe. Beim Lauf des Verbrennungsmotors 5 und wenigstens einem geöffnetem Spülventil 3, 6 wird der kondensierte Kraftstoff aus dem Aktivkohlebehälter 2 über die Ansaugung 4 zusammen mit der Luft in den Zylinder des Verbrennungsmotors 5 angesaugt und verbrannt.

Beim Lauf des Verbrennungsmotor 5 nur unter Teillast wird für die Ansaugung des Kraftstoffs aus dem Aktivkohlebehälter 2 nur ein Spülventil 3 genutzt. Bei einer Volllast wird auch das parallel geschaltete Spülventil 6 genutzt.

### Bezugszeichenliste:

- 1: Kraftstoffbehälter
- 2: Aktivkohlebehälter
- 3: Spülventil
- 4: Ansaugung
- 5: Verbrennungsmotor
- 6: Parallel geschaltetes Spülventil
- 7: Pulsationsdämpfer
- 8: Drosselklappe

## Patentansprüche

1. Entlüftungssystem eines mit einem Aktivkohlebehälter (2) verbundenen Kraftstoffbehälters (1), wobei der Aktivkohlebehälter (2) über ein Spülventil (3) an eine Leitung zwischen einer Drosselklappe (8) und einer Ansaugung (4) des Verbrennungsmotors (5) angeschlossen ist, **dadurch gekennzeichnet, dass** der Aktivkohlebehälter (2) an die Leitung zwischen der Drosselklappe (8) und der Ansaugung (4) des Verbrennungsmotors (5) über mindestens ein weiteres parallel geschaltetes Spülventil (6) angeschlossen ist.

2. Entlüftungssystem des Kraftstoffbehälters nach Anspruch 1, **dadurch gekennzeichnet, dass** die Spülventile (3, 6) mechanisch oder elektrisch betätigt werden.

3. Entlüftungssystem des Kraftstoffbehälters nach Anspruch 1 oder 2, **dadurch gekennzeichnet, dass** zwischen den Aktivkohlebehälter (2) und die Spülventile (3, 6) in der Leitung ein Pulsationsdämpfer (7) angeordnet ist.

## Claims

1. A venting system of a fuel tank (1) connected to an activated carbon canister (2), wherein the activated carbon canister (2) is connected to a line between a throttle valve (8) and an intake (4) of the internal combustion engine (5) via a flushing valve (3), **characterized in that** the activated carbon canister (2) is connected to the line between the throttle valve (8) and the intake (4) of the internal combustion engine (5) via at least one further flushing valve (6) connected in parallel.

2. The venting system of the fuel tank according to claim 1, **characterized in that** the flushing valves (3, 6) are mechanically or electrically operated.

3. The venting system of the fuel tank according to claim 1 or 2, **characterized in that** pulsation damper (7) is arranged in the line between the activated carbon canister (2) and the flushing valves (3, 6).

## Revendications

1. Système de ventilation d'un réservoir de carburant (1) relié à un réservoir de charbon actif (2), dans lequel le réservoir de charbon actif (2) est raccordé, par l'intermédiaire d'une soupape de rinçage (3), à une conduite entre un papillon des gaz (8) et une aspiration (4) du moteur à combustion (5), **caractérisé en ce que** le réservoir de charbon actif (2) est raccordé à la conduite entre le papillon des gaz (8) et l'aspiration (4) du moteur à combustion (5) par l'intermédiaire d'au moins une autre soupape de rinçage (6) branchée en parallèle.

2. Système de ventilation du réservoir de carburant selon la revendication 1, **caractérisé en ce que** les soupapes de rinçage (3, 6) sont actionnées mécaniquement ou électriquement.

3. Système de ventilation du réservoir de carburant selon la revendication 1 ou 2, **caractérisé en ce qu'**un amortisseur de pulsations (7) est disposé dans la conduite, entre le réservoir de charbon actif (2) et les soupapes de rinçage (3, 6).
